# EUROPEAN PATENT APPLICATION

(11) **EP 4 024 523 A1**
(43) Date of publication of application: **06.07.2022**
(21) Application number: 20945115.2
(22) Date of filing: 17.12.2020
(51) Int. Cl.: H01M 4/485

(54) **GRADIENT DOPED COBALT-FREE POSITIVE ELECTRODE MATERIAL AND PREPARATION METHOD THEREFOR, LITHIUM-ION BATTERY POSITIVE ELECTRODE, AND LITHIUM BATTERY**

(30) Priority: 14.07.2020 CN 202010677210
(71) Applicant: SVOLT ENERGY TECHNOLOGY CO., LTD, Changzhou, Jiangsu 213200 (CN)
(72) Inventor: QIAO, Qiqi, hangzhou, Jiangsu 213200 (CN); JIANG, Weijun, hangzhou, Jiangsu 213200 (CN); SUN, Mingzhu, hangzhou, Jiangsu 213200 (CN); XU, Xinpei, hangzhou, Jiangsu 213200 (CN); SHI, Zetao, hangzhou, Jiangsu 213200 (CN); MA, Jiali, hangzhou, Jiangsu 213200 (CN); CHEN, Sixian, hangzhou, Jiangsu 213200 (CN); WANG, Pengfei, hangzhou, Jiangsu 213200 (CN)
(74) Representative: Plougmann Vingtoft a/s
(86) International application number: PCT/CN2020/137039
(87) International publication number: WO 2022/011967

(57) **Abstract**

A gradient doped cobalt-free positive electrode material and a preparation method therefor, a lithium-ion battery positive electrode, and a lithium battery. The positive electrode material consists of LiNiₓMn_{y}A_{z}O₂. The content of element A in the positive electrode material decreases in a direction from a surface layer of the positive electrode material to the center, and A is one or more of Al, Zr, Ti, B, and W. The preparation method is easy to implement, simplifies roasting condition requirements, and provides a cobalt-free positive electrode material having good cycle performance.

## Description

### TECHNICAL FIELD

The present disclosure relates to the field of lithium-ion batteries, for example, a gradient-doped cobalt-free cathode material, a method for preparing the same, a cathode of a lithium-ion battery and a lithium battery.

### BACKGROUND

A cobalt-free cathode material LiNiₓMn₁₋ₓO₂ has the advantages of a low cost and high cycle performance. To further improve the structural stability of the cobalt-free cathode material, doping is required.

CN106654222A discloses a high-nickel cathode material, a preparation method thereof and a lithium-ion battery. The method includes: adding a non-metal dopant into a precursor of the high-nickel cathode material, adding a lithium source, and sintering to obtain the high-nickel cathode material doped with a non-metallic element. The doped element can be uniformly distributed in the material by the method.

At present, gradient doping has certain technical advantages and can not only stabilize the bulk structure of a material but also modify the surface of the material. Generally, gradient doping is mainly performed on a precursor. In a synthesis process of the precursor, an amount in which a dopant is added is controlled so that the gradient doping of a doped element is formed.

However, when a gradient-doped precursor and a lithium salt are mixed and subjected to high-temperature treatment, gradient elements formed in the precursor tend to be uniformly distributed and the purpose of gradient doping cannot be achieved. Additionally, such a method has severe requirements on calcination conditions.

Therefore, it is of great significance to study and develop a gradient-doped cobalt-free cathode material.

### SUMMARY

The following is a summary of the subject matter described in detail herein. This summary is not intended to limit the scope of the claims.

The present disclosure provides a gradient-doped cobalt-free cathode material, a method for preparing the same, a cathode of a lithium-ion battery and a lithium battery.

In an embodiment, the present disclosure provides a gradient-doped cobalt-free cathode material, wherein the composition of the cathode material is represented by a general formula of LiNiₓMn_{y}A_{z}O₂, where 0.55 ≤ x ≤ 0.95, 0.05 ≤ y ≤ 0.45, and 0.005 ≤ z ≤ 0.02; and the content of element A in the cathode material decreases in a direction from a skin layer to a center of the cathode material;
wherein the element A is one or more of Al, Zr, Ti, B and W.

In an embodiment, x is, for example, 0.55, 0.60, 0.65, 0.70, 0.72, 0.75, 0.80, 0.85, 0.90, 0.93, or 0.95, *etc.*

In an embodiment, y is, for example, 0.05, 0.08, 0.10, 0.15, 0.20, 0.25, 0.30, 0.35, 0.40, or 0.45, *etc.*

In an embodiment, z is, for example, 0.005, 0.008, 0.01, 0.012, 0.015, 0.017, or 0.02, *etc.*

In an embodiment, the content of the element A in the cathode material is a content by weight.

In an embodiment provided by the present disclosure, the gradient-doped cobalt-free cathode material can overcome the problems in the existing art where a doping element tends to be uniformly distributed and severe requirements are imposed on calcination conditions in a preparation process. Moreover, the cobalt-free cathode material has good cycle performance.

In an embodiment, with reference to a total weight of the cathode material, the content of the element A in the skin layer of the cathode material is 0.2-2% by weight, for example, 0.2% by weight, 0.4% by weight, 0.5% by weight, 0.7% by weight, 0.9% by weight, 1% by weight, 1.2% by weight, 1.3% by weight, 1.5% by weight, 1.7% by weight, or 2% by weight, *etc,* and the content of the element A in the center of the cathode material is 0.05-0.2% by weight, for example, 0.05% by weight, 0.08% by weight, 0.1% by weight, 0.12% by weight, 0.14% by weight, 0.15% by weight, 0.17% by weight, 0.18% by weight, or 0.2% by weight, *etc.*

In an embodiment, with reference to the total weight of the cathode material, the content of the element A in the skin layer of the cathode material is 0.2-1% by weight and the content of the element A in the center of the cathode material is 0.05-0.1% by weight.

In an embodiment, with reference to the total weight of the cathode material, a total content of Al is 0.1-1% by weight, for example, 0.1% by weight, 0.2% by weight, 0.3% by weight, 0.4% by weight, 0.5% by weight, 0.6% by weight, 0.7% by weight, 0.8% by weight, 0.9% by weight, or 1% by weight, *etc;* a total content of Zr is 0.1-2% by weight, for example, 0.1% by weight, 0.3% by weight, 0.4% by weight, 0.5% by weight, 0.7% by weight, 0.8% by weight, 1% by weight, 1.2% by weight, 1.5% by weight, 1.8% by weight, or 2% by weight, *etc;* a total content of Ti is 0.1-2% by weight, for example, 0.1% by weight, 0.2% by weight, 0.4% by weight, 0.6% by weight, 0.8% by weight, 1% by weight, 1.3% by weight, 1.6% by weight, 1.8% by weight, or 2% by weight, *etc;* a total content of B is 0.1-1.5% by weight, for example, 0.1% by weight, 0.3% by weight, 0.4% by weight, 0.6% by weight, 0.7% by weight, 1% by weight, 1.2% by weight, or 1.5% by weight, *etc;* and a total content of W is 0.1-2% by weight, for example, 0.2% by weight, 0.3% by weight, 0.5% by weight, 0.7% by weight, 0.9% by weight, 1.2% by weight, 1.5% by weight, 1.8% by weight, or 2% by weight, *etc.*

In an embodiment, with reference to the total weight of the cathode material, the total content of Al is 0.5-1% by weight, the total content of Zr is 0.5-1% by weight, the total content of Ti is 0.5-0.8% by weight, the total content of B is 0.5-1% by weight, and the total content of W is 0.5-1.5% by weight.

In an embodiment, the cathode material is a single crystal material.

In an embodiment, the cathode material has an average particle size of 1-5 µm, for example, 1 µm, 2 µm, 2.5 µm, 3 µm, 3.5 µm, 4 µm, or 5 µm, *etc.*

In an embodiment, the cathode material has an average particle size of 3-4 µm.

In an embodiment, the present disclosure provides a method for preparing a gradient-doped cobalt-free cathode material, including:
(1) carrying out first mixing and first calcination in sequence on a lithium salt, a precursor and a first additive to obtain a first material;
(2) carrying out second mixing and second calcination in sequence on the first material and a second additive to obtain a second material; and
(3) crushing and sieving the second material to obtain the gradient-doped cobalt-free cathode material;
   wherein the precursor has a chemical formula of Niₓ₁Mn_{y1}(OH)₂, where 0.55 ≤ x1 ≤ 0.95, for example, 0.55, 0.60, 0.65, 0.70, 0.72, 0.75, 0.80, 0.85, 0.90, 0.93, or 0.95, *etc;* and 0.05 ≤ y1 ≤ 0.45, for example, 0.05, 0.08, 0.10, 0.15, 0.20, 0.25, 0.30, 0.35, 0.40, or 0.45, *etc;*
   wherein the first additive and the second additive are the same and each selected from one or more of ZrO₂, Al₂O₃, TiO₂, Zr(OH)₄, Al(OH)₃, H₃BO₃ and WO₃.

In an embodiment provided by the present disclosure, the method for preparing a gradient-doped cobalt-free cathode material has the advantages below.
(1) The gradient-doped cobalt-free cathode material can be formed through two-step doping.
(2) The gradient-doped cobalt-free cathode material has good cycle performance.
(3) Compared with conventional gradient doping, the method is simple and easy to operate, has simple requirements on calcination conditions, and can be applied on a large scale.

In an embodiment, in step (1), a weight ratio of the lithium salt, the precursor and the first additive is 1:(2-2.2):(0.003-0.03), for example, 1:2:0.005, 1:2:0.01, 1:2:0.015, 1:2:0.02, 1:2:0.025, 1:2:0.03, 1:2.1:0.005, 1:2.15:0.01, 1:2.15:0.015, 1:2.1:0.02, 1:2.1:0.025, 1:2.1:0.03, 1:2.2:0.005, 1:2.2:0.01, 1:2.2:0.015, 1:2.2:0.02, 1:2.2:0.025, or 1:2.2:0.03, *etc.*

In an embodiment, in step (2), a weight ratio of the first material and the second additive is 1:(0.004-0.06), for example, 1:0.004, 1:0.008, 1:0.01, 1:0.015, 1:0.02, 1:0.025, 1:0.03, 1:0.04, 1:0.05, or 1:0.06, *etc.*

In an embodiment, a weight ratio of the first additive and the second additive is 1:(2-4), for example, 1:2, 1:2.5:2, 1:3, 1:3.5, or 1:4, *etc.*

In an embodiment, in step (1), conditions of the first mixing include stirring for 10-20 min, for example, 10 min, 15 min, or 20 min, *etc,* with a 100L device at a rotational speed of 800-900 rpm, for example, 800 rpm, 850 rpm, 880 rpm, or 900 rpm, *etc.*

In an embodiment, conditions of the first calcination include a temperature of 500-600 °C, for example, 500 °C, 525 °C, 550 °C, or 600 °C, *etc,* a temperature ramp rate of 1-5 °C/min, for example, 1 °C/min, 2 °C/min, 3 °C/min, or 5 °C/min, *etc,* and a duration of 4-6 h, for example, 4 h, 5 h, or 6 h, *etc.*

In an embodiment, in step (2), conditions of the second mixing include stirring for 5-15 min, for example, 5 min, 10 min, or 15 min, *etc,* with a 100L device at a rotational speed of 900-1000 rpm, for example, 900 rpm, 950 rpm, or 1000 rpm, *etc.*

In an embodiment, conditions of the second calcination include a temperature of 900-1000 °C, for example, 900 °C, 930 °C, 960 °C, or 1000 °C, *etc,* a temperature ramp rate of 1-5 °C/min, for example, 1 °C/min, 2 °C/min, 4 °C/min, or 5 °C/min, *etc,* and a duration of 10-20 h, for example, 10 h, 12 h, 15 h, or 20 h, *etc.*

In an embodiment, the present disclosure provides a cobalt-free cathode material prepared by the method.

In an embodiment, the present disclosure provides a cathode of a lithium-ion battery, wherein the cathode of the lithium-ion battery contains the cobalt-free cathode material.

In an embodiment, the present disclosure provides a lithium-ion battery, including a cathode and an anode, where the cathode is the cathode of the lithium-ion battery.

### BRIEF DESCRIPTION OF DRAWINGS

The drawings are intended to provide a further understanding of technical solutions herein, constitute a part of the specification, and explain the technical solutions herein in conjunction with embodiments of the present application and do not limit the technical solutions herein.
FIG. 1 shows an image of a cobalt-free cathode material doped with no element A taken (by a fold of 1000) on a scanning electron microscope (SEM) according to an example of the present disclosure;
FIG. 2 shows an image of a cobalt-free cathode material doped with no element A taken (by a fold of 5000) on a SEM according to an example of the present disclosure;
FIG. 3 shows an image of a cobalt-free cathode material gradiently doped with an element A taken (by a fold of 1000) on a SEM according to an example of the present disclosure;
FIG. 4 shows an image of a cobalt-free cathode material gradiently doped with an element A taken (by a fold of 5000) on a SEM according to an example of the present disclosure;
FIG. 5 shows an EDS image of a cobalt-free cathode material doped with no element A according to an example of the present disclosure;
FIG. 6 shows an EDS image of a cobalt-free cathode material gradiently doped with an element A according to an example of the present disclosure; and
FIG. 7 shows curves of cycle performance of a cobalt-free cathode material doped with no element A and a cobalt-free cathode material gradiently doped with an element A according to an example of the present disclosure.

### Reference list

a-before doping cobalt-free cathode material doped with no element A
b-after gradient doping cobalt-free cathode material gradiently doped with an element A

### DETAILED DESCRIPTION

In an embodiment, the present disclosure provides a gradient-doped cobalt-free cathode material, wherein the composition of the cathode material is represented by a general formula of LiNiₓMn_{y}A_{z}O₂, where 0.55 ≤ x ≤ 0.95, 0.05 ≤ y ≤ 0.45, and 0.005 ≤ z ≤ 0.02; and the content of element A in the cathode material decreases in a direction from a skin layer to a center of the cathode material;
wherein the element A is one or more of Al, Zr, Ti, B and W.

In the present disclosure, it is to be noted that the "cathode material" refers to a "cobalt-free cathode material".

Inventors of the present disclosure have found through experiments that in the related art, in a synthesis process of a precursor, an amount in which a dopant is added is controlled so that a doped element for gradient doping is formed in the precursor. However, when the precursor doped with gradient elements and a lithium salt are mixed and subjected to high-temperature calcination, the gradient elements formed in the precursor tend to be uniformly distributed due to high-temperature diffusion and the purpose of gradient doping cannot be achieved. Additionally, severe requirements are imposed on conditions of the high-temperature calcination. In an embodiment provided by the present disclosure, the inventors can form the gradient-doped cobalt-free cathode material by controlling a ratio of a dopant and calcination conditions during two-step doping. The cathode material has good cycle performance and a method for preparing the same is simple and easy to operate.

Additionally, the cathode material provided in the embodiment of the present disclosure is the cobalt-free cathode material, where the cobalt-free cathode material is stable in structure, does not depend on a cobalt element, and has a lower cost than a cobalt-containing material.

In the present disclosure, it is to be noted that the cobalt-free cathode material belongs to a single crystal material, and it can be determined from SEM images that the cobalt-free cathode material in the present disclosure is a cobalt-free single crystal cathode material that is sheet-like.

It is to be noted that the content of the element A in the cathode material decreases, where a "decrease" is a "gradient decrease".

In an embodiment, 0.546 ≤ x ≤ 0.89, for example, x may be 0.546, 0.739, 0.744, 0.75, 0.89 or any value within a range formed by any two of these point values.

In an embodiment, 0.099 ≤ y ≤ 0.447, for example, y may be 0.099, 0.246, 0.248, 0.25, 0.447 or any value within a range formed by any two of these point values.

In an embodiment, 0.0067 ≤ z ≤ 0.015, for example, z may be 0.0067, 0.008, 0.01, 0.015 or any value within a range formed by any two of these point values.

In an embodiment, x is 0.75, y is 0.25, and z is 0.01.

In an embodiment, 0.9997 ≤ x + y + z ≤ 1.01; a value of x+y+z is 1.01, 0.9997, 0.999 or 1.

In an embodiment, the value of x+y+z is 1.

In an embodiment, the element A is one or more of Al, Zr and Ti.

In an embodiment, the element A is Al.

In the gradient-doped cobalt-free cathode material provided in the embodiment of the present disclosure, too large a content of the doped element A results in a decreased capacity of the material so that the skin layer of the cathode material is a material with a larger content of the doped element A and the content of the doped element A decreases towards the center.

In an embodiment, with reference to a total weight of the cathode material, the content of the element A in the skin layer of the cathode material is 0.2-2% by weight and the content of the element A in the center of the cathode material is 0.05-0.2% by weight. The content of the doped element A is limited to such ranges so that the cobalt-free cathode material has both a high capacity and good stability.

In an embodiment, with reference to the total weight of the cathode material, the content of the element A in the skin layer of the cathode material is 0.2-1% by weight and the content of the element A in the center of the cathode material is 0.05-0.1% by weight.

In an embodiment provided by the present disclosure, the cathode material is doped with the element A, and the doped element is gradually permeated into a bulk phase of the cathode material in the form of a concentration gradient during a sintering process. Such element doping can effectively reduce a degree of Li/Ni mixing in the cathode material and improve stability of a lattice of the material.

In an embodiment, with reference to the total weight of the cathode material, a total content of Al is 0.1-1% by weight, a total content of Zr is 0.1-2% by weight, a total content of Ti is 0.1-2% by weight, a total content of B is 0.1-1.5% by weight, and a total content of W is 0.1-2% by weight.

In an embodiment, with reference to the total weight of the cathode material, the total content of Al is 0.5-1.0% by weight, the total content of Zr is 0.5-1.0% by weight, the total content of Ti is 0.5-0.8% by weight, the total content of B is 0.1-0.5% by weight, and the total content of W is 0.5-1.5% by weight.

In an embodiment, in the cathode material, the element A is one or more of Al, Zr, Ti, B or W.

In an embodiment, the element A is Al and the content of the element A is 0.5-1.0% by weight.

In an embodiment, the element A is Zr and the content of the element A is 0.5-1.0% by weight.

In an embodiment, the element A is Ti and the content of the element A is 0.5-0.8% by weight.

In an embodiment, the element A is B and the content of the element A is 0.1-0.5% by weight.

In an embodiment, the element A is W and the content of the element A is 0.5-1.5% by weight.

In an embodiment, the element A is multiple of Al, Zr, Ti, B or W, and the total content of the element A (that is, a total content of multiple elements) is 0.5-1.5% by weight. For example, in the cathode material, the element A is a combination of Al, Zr and B and the total content of the element A (that is, a total content of Al, Zr and B) is 0.1-1.5% by weight, for example, 0.1% by weight, 0.3% by weight, 0.5% by weight, 0.8% by weight, 1% by weight, 1.2% by weight, or 1.5% by weight, *etc.*

The content of the doped element is limited to such ranges so that the cobalt-free cathode material has both a high capacity and a long cycle lifetime.

In an embodiment, the cathode material is a single crystal material.

In an embodiment, the cathode material has an average particle size of 1-5 µm.

In an embodiment, the cathode material has an average particle size of 3-4 µm.

In the present disclosure, it is to be noted that the "average particle size" refers to D50 of the cathode material.

In an embodiment, the "average particle size" is measured by a laser particle size analyzer.

In an embodiment, the present disclosure provides a method for preparing a gradient-doped cobalt-free cathode material, including:
(1) carrying out first mixing and first calcination in sequence on a lithium salt, a precursor and a first additive to obtain a first material;
(2) carrying out second mixing and second calcination in sequence on the first material and a second additive to obtain a second material; and
(3) crushing and sieving the second material to obtain the gradient-doped cobalt-free cathode material;
   wherein the precursor has a chemical formula of Niₓ₁Mn_{y1}(OH)₂, where 0.55 ≤ x1 ≤ 0.95 and 0.05 ≤ y1 ≤ 0.45;
   wherein the first additive and the second additive are the same and each selected from one or more of ZrO₂, Al₂O₃, TiO₂, Zr(OH)₄, Al(OH)₃, H₃BO₃ and WO₃.

In an embodiment, in step (1), a weight ratio of the lithium salt, the precursor and the first additive is 1:(2-2.2):(0.003-0.03). The weight ratio of the lithium salt, the precursor and the first additive is 1:(2-2.1):(0.003-0.01). The inventors of the present disclosure have found through experiments that too large an amount of a precursor results in a low capacity and a poor cycle; too small an amount of the precursor causes impurities to easily occur in a crystal; too large an amount of an additive results in a reduced capacity, and too small an amount of the additive results in poor cycle performance.

In an embodiment, in step (2), a weight ratio of the first material and the second additive is 1:(0.004-0.06). The weight ratio of the first material and the second additive is 1:(0.006-0.03).

In an embodiment, a weight ratio of the first additive and the second additive is 1:(2-4). The weight ratio of the first additive and the second additive is 1:(2-3).

In an embodiment, in step (1), conditions of the first mixing include stirring for 10-20 min with a 100L device at a rotational speed of 800-900 rpm.

In an embodiment, the stirring has a rotational speed of 850-900 rpm and a duration of 15-20 min.

In an embodiment, conditions of the first calcination include a temperature of 500-600 °C, a temperature ramp rate of 1-5 °C/min and a duration of 4-6 h.

In an embodiment, the temperature is 500-550 °C, the temperature ramp rate is 1-3 °C/min and the duration is 4-5 h.

In an embodiment, in step (2), conditions of the second mixing include stirring for 5-15 min with a 100L device at a rotational speed of 900-1000 rpm.

In an embodiment, the stirring has a rotational speed of 950-1000 rpm and a duration of 10-15 min.

In an embodiment, conditions of the second calcination include a temperature of 900-1000 °C, a temperature ramp rate of 1-5 °C/min and a duration of 10-20 h.

In an embodiment, the temperature is 950-1000 °C, the temperature ramp rate is 3-5 °C/min and the duration is 10-15 h.

In an embodiment, the present disclosure provides a cobalt-free cathode material prepared by the preceding method.

In an embodiment, the present disclosure provides a cathode of a lithium-ion battery. The cathode of the lithium-ion battery contains the preceding cobalt-free cathode material.

In an embodiment, the present disclosure provides a lithium-ion battery. The lithium-ion battery includes a cathode and an anode, where the cathode is the preceding cathode of the lithium-ion battery.

The present disclosure is described below in detail through examples.

In the following examples and comparative examples:
(1) SEM images were measured by a SEM, where the SEM was purchased from ZEISS in Germany and its model was SUPRA 55VP.
(2) Cycle performance was measured by testing an assembled button cell. The button cell was manufactured as follows:
   The cathode material, conductive carbon black and a binder polyvinylidene fluoride (PVDF) were mixed at a mass ratio of 92:4:4, and the mixture was made into a slurry with N-methylpyrrolidone (NMP) as a solvent, coated on an aluminum foil, and vacuum-dried at 90 °C so that a cathode sheet was obtained. An anode sheet (lithium sheet), the cathode sheet, an electrolyte (LiPF₆ of 1 mol/L with EC:EMC = 1:1) (EC is ethylene carbonate and EMC is ethyl methyl carbonate) and a separator were then assembled into the cell.
(3) Test of 50-cycle performance: The resulting cell was subjected to a charge/discharge test in a 25±2 °C environment and at a charge/discharge voltage of 3.0-4.4 V and a current density of 0.5C/1C (0.5C charge and 1C discharge).
(4) The lithium salt was purchased from Ganfeng Lithium Co., Ltd.; the precursor was purchased from Jinchi Energy Materials Co., Ltd.; and the additives were purchased from Shijiazhuang Jinghuang Technology Co., Ltd.

Typical but non-limiting examples of the present disclosure are described below.

### Example 1

This example provides a cobalt-free cathode material. A method for preparing the cobalt-free cathode material includes the steps below.
(1) Raw material mixing: 100 g of LiOH, 210 g of Ni_{0.75}Mn_{0.25}(OH)₂ (precursor) and 0.45 g of Al₂O₃ (additive) were mixed using a high-speed mixing device for 15 min, where a 100L device had a rotational speed of 850 rpm and material filling efficiency in the device was 50%.
(2) First calcination: The mixed materials were reacted for 5 h in an oxygen atmosphere (with a concentration greater than 90%) and at 550 °C, where a temperature ramp rate was 3 °C/min and the resultant was naturally cooled.
(3) Second mixing: 220 g of materials subjected to first calcination and 0.90 g of Al₂O₃ (additive) were mixed for 10 min, where the 100L device had a rotational speed of 950 rpm.
(4) Second calcination: The materials subjected to second mixing were reacted for 15 h at a high temperature of 950 °C, where a temperature ramp rate was 3 °C/min and the resultant was naturally cooled and sieved with a 350 mesh sieve.

The final product, the cobalt-free cathode material, was obtained, where the cathode material was expressed as LiNi_{0.75}Mn_{0.25}A_{z}O₂, where z = 0.01. With reference to a total weight of the cathode material, A was an element Al, and a content of the element Al in a skin layer of the cathode material was 0.55% by weight and the content of the element Al in a center of the cathode material was 0.06% by weight.

With reference to the total weight of the cathode material, a total content of Al was 0.6% by weight.

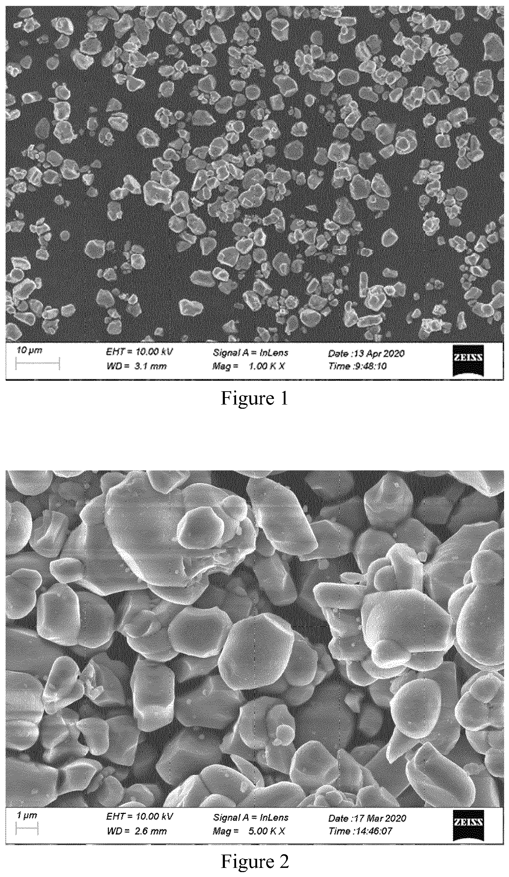

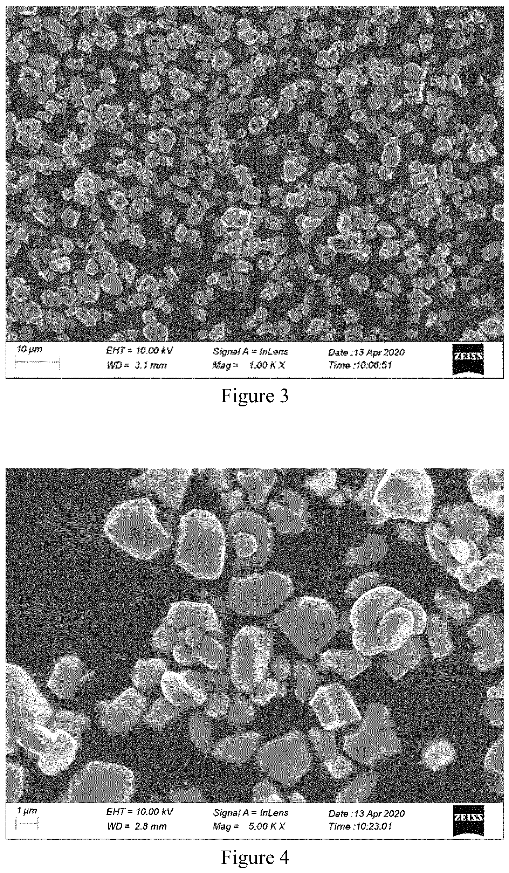

FIG. 1 shows an image of a cobalt-free cathode material doped with no element A taken (by a fold of 1000) on a SEM according to an example of the present disclosure. FIG. 2 shows an image of a cobalt-free cathode material doped with no element A taken (by a fold of 5000) on a SEM according to an example of the present disclosure. FIG. 3 shows an image of a cobalt-free cathode material gradiently doped with an element A taken (by a fold of 1000) on a SEM according to an example of the present disclosure. FIG. 4 shows an image of a cobalt-free cathode material gradiently doped with an element A taken (by a fold of 5000) on a SEM according to an example of the present disclosure. It can be found through a comparison of SEM images of materials before and after doping (the cobalt-free cathode material doped with no element A and the cobalt-free cathode material gradiently doped with the element A) in FIGS. 1 to 4 that the materials before and after doping have substantially unchanged morphology and are single crystal, that is, the cathode material is a single crystal material and has an average particle size of 1-5 µm, for example, 3-4 µm.

Additionally, in the present disclosure, it is to be noted that in FIGS 1 to 4, "ZEISS" is an identifier of a device manufacturer.

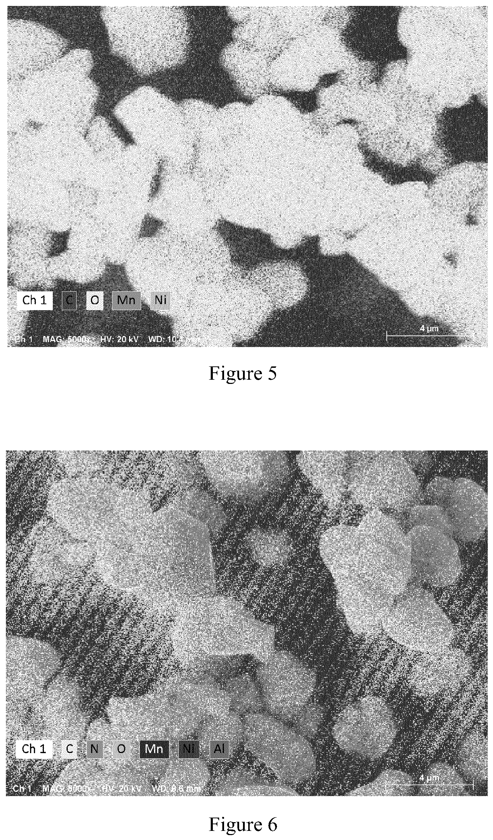

FIG. 5 shows an EDS of a cobalt-free cathode material doped with no element A according to an example of the present disclosure. FIG. 6 shows an EDS of a cobalt-free cathode material gradiently doped with an element A according to an example of the present disclosure. FIGS. 5 and 6 show the presence of Al on the surface of the material after doping (the cobalt-free cathode material gradiently doped with the element A), which proves that part of the doped element is on the surface.

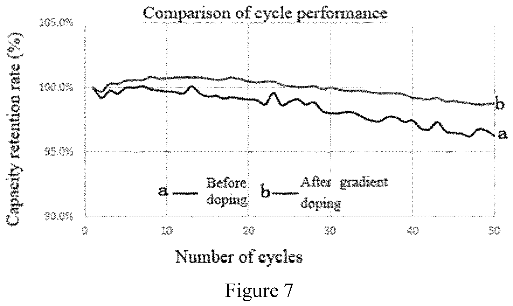

FIG. 7 shows curves of cycle performance of a cobalt-free cathode material doped with no element A and a cobalt-free cathode material gradiently doped with an element A according to an example of the present disclosure. As can be seen from FIG. 7, the capacity retention rate of the cobalt-free cathode material doped with no element A is 96.3% after 50 cycles, and the capacity retention rate of the gradient-doped material prepared in Example 1 after 50 cycles is 98.8% so that cycle performance is improved by 2.6%.

### Example 2

This example provides a cobalt-free cathode material. A method for preparing the cobalt-free cathode material includes the steps below.
(1) Raw material mixing: 100 g of LiOH, 205g of NiₓMn_{y}(OH)₂ (precursor) (x = 0.55 and y = 0.45) and 0.60g of ZrO₂ (additive) were mixed using a high-speed mixing device for 10 min, where a 100L device had a rotational speed of 800 rpm and material filling efficiency in the device was 30%.
(2) First calcination: The mixed materials were reacted for 6 h in an oxygen atmosphere (with a concentration greater than 90%) and at 500 °C, where a temperature ramp rate was 2 °C/min and the resultant was naturally cooled.
(3) Second mixing: 215 g of materials subjected to first calcination and 1.25 g of ZrO₂ (additive) were mixed for 8 min, where the 100L device had a rotational speed of 900 rpm.
(4) Second calcination: The materials subjected to second mixing were reacted for 12 h at a high temperature of 900 °C, where a temperature ramp rate was 2 °C/min and the resultant was naturally cooled and sieved with a 300 mesh sieve.

The final product, the cobalt-free cathode material, was obtained, where the cathode material was expressed as LiNiₓMn_{y}A_{z}O₂, where x = 0.546, y = 0.447, and z = 0.0067. With reference to a total weight of the cathode material, A was an element Zr, and a content of the element Zr in a skin layer of the cathode material was 0.8% by weight and the content of the element Zr in a center of the cathode material was 0.1% by weight.

With reference to the total weight of the cathode material, a total content of Zr was 0.86% by weight.

### Example 3

This example provides a cobalt-free cathode material. A method for preparing the cobalt-free cathode material includes the steps below.
(1) Raw material mixing: 100 g of LiOH, 208 g of NiₓMn_{y}(OH)₂ (precursor) (x = 0.90 and y = 0.10) and 0.50 g of TiO₂ (additive) were mixed using a high-speed mixing device for 18 min, where a 100L device had a rotational speed of 900 rpm and material filling efficiency in the device was 60%.
(2) First calcination: The mixed materials were reacted for 4 h in an oxygen atmosphere (with a concentration greater than 90%) and at 600 °C, where a temperature ramp rate was 4 °C/min and the resultant was naturally cooled.
(3) Second mixing: 218 g of materials subjected to first calcination and 1.20 g of TiO₂ (additive) were mixed for 12 min, where the 100L device had a rotational speed of 1000 rpm.
(4) Second calcination: The materials subjected to second mixing were reacted for 16 h at a high temperature of 1000 °C, where a temperature ramp rate was 4 °C/min and the resultant was naturally cooled and sieved with a 400 mesh sieve.

The final product, the cobalt-free cathode material, was obtained, where the cathode material was expressed as LiNiₓMn_{y}A_{z}O₂, where x = 0.89, y = 0.099, and z = 0.01. With reference to a total weight of the cathode material, A was an element Ti, and a content of the element Ti in a skin layer of the cathode material was 0.69% by weight and the content of the element Ti in a center of the cathode material was 0.10% by weight.

With reference to the total weight of the cathode material, a total content of Ti was 0.78% by weight.

### Example 4

A cobalt-free cathode material was prepared under the same conditions as that in Example 1 except the differences below.

In step (1), "0.45 g of Al₂O₃ (additive)" was modified to "0.67 g of Al₂O₃ (additive)". In step (2), "0.9 g of Al₂O₃ (additive)" was modified to "1.34 g of Al₂O₃ (additive)".

The final product, the cobalt-free cathode material, was obtained, where the cathode material was expressed as LiNiₓMn_{y}A_{z}O₂, where x = 0.739, y = 0.246, and z = 0.015. With reference to a total weight of the cathode material, A was an element Al, and a content of the element Al in a skin layer of the cathode material was 0.8% by weight and the content of the element Al in a center of the cathode material was 0.09% by weight.

With reference to the total weight of the cathode material, a total content of Al was 0.9% by weight.

### Example 5

A cobalt-free cathode material was prepared under the same conditions as that in Example 1 except a difference that in step (1), "210 g of Ni_{0.75}Mn_{0.25}(OH)₂ (precursor)" was modified to "220 g of Ni_{0.75}Mn_{0.25}(OH)₂ (precursor)".

The final product, the cobalt-free cathode material, was obtained, where the cathode material was expressed as LiNiₓMn_{y}A_{z}O₂, where x = 0.744, y = 0.24, and z = 0.008. With reference to a total weight of the cathode material, A was an element Al, and a content of the element Al in a skin layer of the cathode material was 0.50% by weight and the content of the element Al in a center of the cathode material was 0.05% by weight.

With reference to the total weight of the cathode material, a total content of Al was 0.55% by weight.

### Comparative Example 1

A cobalt-free cathode material was prepared under the same conditions as that in Example 1 except a difference that in steps (1) and (2), no first additive and no second additive were doped.

The final product, the cobalt-free cathode material, was obtained, where the cathode material was expressed as LiNi_{0.75}Mn_{0.25}O₂.

### Comparative Example 2

A cobalt-free cathode material was prepared under the same conditions as that in Example 1 except a difference that a precursor was doped with an additive. Specific steps are described below.
(1) Raw material mixing: 210 g of Ni_{0.75}Mn_{0.25}(OH)₂ (precursor) and 1.35 g of Al₂O₃ (additive) were mixed using a high-speed mixing device for 15 min, where a 100L device had a rotational speed of 850 rpm and material filling efficiency in the device was 50%.
(2) Raw material mixing: the mixed materials and 100 g of LiOH were mixed using the high-speed mixing device for 15 min, where the 100L device had a rotational speed of 850 rpm and the material filling efficiency in the device was 50%.
(3) First calcination: The mixed materials were reacted for 5 h in an oxygen atmosphere (with a concentration greater than 90%) and at 550 °C, where a temperature ramp rate was 3 °C/min and the resultant was naturally cooled.
(4) Second calcination: The materials subjected to second mixing were reacted for 15 h at a high temperature of 950 °C, where a temperature ramp rate was 3 °C/min and the resultant was naturally cooled and sieved with a 350 mesh sieve.

The final product, the cobalt-free cathode material, was obtained, where the cathode material was expressed as LiNi_{0.75}Mn_{0.25}A_{z}O₂, where z = 0.01. With reference to a total weight of the cathode material, A was an element Al, and a content of the element Al in a skin layer of the cathode material was 0% by weight and the content of the element Al in a center of the cathode material was 0.6% by weight.

With reference to the total weight of the cathode material, a total content of Al was 0.6% by weight.

### Comparative Example 3

A cobalt-free cathode material was prepared under the same conditions as that in Example 1 except differences that in step (1), "0.45 g of Al₂O₃ (additive)" was modified to "0.60 g of Al₂O₃ (additive)" and in step (3), "0.90 g of Al₂O₃ (additive)" was modified to "0.75 g of Al₂O₃ (additive)".

The final product, the cobalt-free cathode material, was obtained, where the cathode material was expressed as LiNi_{0.75}Mn_{0.25}A_{z}O₂, where z = 0.01. With reference to a total weight of the cathode material, A was an element Al, and a content of the element Al in a skin layer of the cathode material was 0.7% by weight and the content of the element Al in a center of the cathode material was 0.5% by weight.

With reference to the total weight of the cathode material, a total content of Al was 0.55% by weight.

### Comparative Example 4

A cobalt-free cathode material was prepared under the same conditions as that in Example 1 except differences that in step (2), "reacted for 5 h at 550 °C, where a temperature ramp rate was 3 °C/min" was modified to "reacted for 10 h at 650 °C, where a temperature ramp rate was 10 °C/min" and in step (4), "reacted for 15 h at 950 °C, where a temperature ramp rate was 3 °C/min" was modified to "reacted for 25 h at 850 °C, where a temperature ramp rate was 8 °C/min".

The final product, the cobalt-free cathode material, was obtained, where the cathode material was expressed as LiNi_{0.75}Mn_{0.25}A_{z}O₂, where z = 0.01. With reference to a total weight of the cathode material, A was an element Al, and a content of the element Al in a skin layer of the cathode material was 0.5% by weight and the content of the element Al in a center of the cathode material was 0.7% by weight.

With reference to the total weight of the cathode material, a total content of Al was 0.58% by weight.

### Comparative Example 5

A cobalt-free cathode material was prepared under the same conditions as that in Example 1 except differences that in step (1), "0.45 g of Al₂O₃ (additive)" was modified to "1.35 g of Al₂O₃ (additive)" and in step (3), no additive Al₂O₃ was mixed.

The final product, the cobalt-free cathode material, was obtained, where the cathode material was expressed as LiNi_{0.75}Mn_{0.25}A_{z}O₂, where z = 0.01. With reference to a total weight of the cathode material, A was an element Al, and a content of the element Al in a skin layer of the cathode material was 0.6% by weight and the content of the element Al in a center of the cathode material was 0.6% by weight.

With reference to the total weight of the cathode material, a total content of Al was 0.6% by weight.

### Test Example

Cycle performance of the cobalt-free cathode materials prepared in Examples 2 to 5 and Comparative Examples 1 to 5 was tested. The results are shown in Table 1. Table 1 shows a capacity retention rate after 50 cycles and % improvement in cycle performance of the cobalt-free cathode material.

**Table 1**

| No. | Capacity Retention Rate after 50 Cycles (%) | % improvement in cycle performance * |
|---|---|---|
| Example 1 | 98.8 | 2.6 |
| Example 2 | 98.5 | 2.28 |
| Example 3 | 98.3 | 2.07 |
| Example 4 | 97.8 | 1.56 |
| Example 5 | 98.1 | 1.87 |
| Comparative Example 1 | 96.3 | 0 |
| Comparative Example 2 | 97.1 | 0.83 |
| Comparative Example 3 | 97.4 | 1.14 |
| Comparative Example 4 | 96.5 | 0.21 |
| Comparative Example 5 | 96.8 | 0.52 |

| | | |
|---|---|---|
| ^{∗} " % improvement in cycle performance " refers to a percentage calculated by the capacity retention rate after 50 cycles of each of the cobalt-free cathode materials prepared in Examples 1 to 5 and Comparative Examples 2 to 5 relative to the capacity retention rate after 50 cycles of the "cathode material with no dopant" (Comparative Example 1), specifically: % improvement in cycle performance = (the capacity retention rate after 50 cycles of the cobalt-free cathode material - the capacity retention rate after 50 cycles of Comparative Example 1)/the capacity retention rate after 50 cycles of Comparative Example 1. | | |

As can be seen from the results in Table 1, using the preparation method of the present disclosure, the cobalt-free cathode material LiNi_{0.75}Mn_{0.25}Al_{0.01}O₂ is prepared in Example 1 (where the element Al is 0.55% by weight in the skin layer of the cathode material and 0.06% by weight in the center of the cathode material), the cobalt-free cathode material LiNi_{0.546}Mn_{0.447}Zr_{0.0067}O₂ is prepared in Example 2 (where the element Zr is 0.8% by weight in the skin layer of the cathode material and 0.1% by weight in the center of the cathode material), the cobalt-free cathode material LiNi_{0.89}Mn_{0.099}Ti_{0.01}O₂ is prepared in Example 3 (where the element Ti is 0.69% by weight in the skin layer of the cathode material and 0.10% by weight in the center of the cathode material), the cobalt-free cathode material LiNi_{0.739}Mn_{0.246}Al_{0.015}O₂ is prepared in Example 4 (where the element Al is 0.8% by weight in the skin layer of the cathode material and 0.09% by weight in the center of the cathode material) and the cobalt-free cathode material LiNi_{0.744}Mn_{0.248}Al_{0.008}O₂ is prepared in Example 5 (where the element Al is 0.50% by weight in the skin layer of the cathode material and 0.05% by weight in the center of the cathode material). As can be seen, Examples 1 to 5 all have a high capacity retention rate and good cycle performance.

Comparative Examples 1 to 5 are cobalt-free cathode materials prepared relative to Example 1. LiNi_{0.75}Mn_{0.25}O₂ is prepared in Comparative Example 1, LiNi_{0.75}Mn_{0.25}Al_{0.01}O₂ is prepared in Comparative Example 2 (where the element Al is 0% by weight in the skin layer of the cathode material and 0.6% by weight in the center of the cathode material), the cathode material LiNi_{0.75}Mn_{0.25}Al_{0.01}O₂ is prepared in Comparative Example 3 (where the element Al is 0.7% by weight in the skin layer of the cathode material and 0.5% by weight in the center of the cathode material), the cathode material LiNi_{0.75}Mn_{0.25}Al_{0.01}O₂ is prepared in Comparative Example 4 (where the element Al is 0.5% by weight in the skin layer of the cathode material and 0.7% by weight in the center of the cathode material), and the cathode material LiNi_{0.75}Mn_{0.25}Al_{0.01}O₂ is prepared in Comparative Example 5 (where the element Al is 0.6% by weight in the skin layer of the cathode material and 0.6% by weight in the center of the cathode material). Since Comparative Examples 1 to 5 do not use the method for preparing the gradient-doped cobalt-free cathode material provided by the present disclosure, Comparative Examples 1 to 5 have a low capacity retention rate and poor cycle performance compared with Example 1.

Additionally, the method for preparing the gradient-doped cobalt-free cathode material provided by the present disclosure is simple and easy to operate and has simple requirements on calcination conditions.

## Claims

1. A gradient-doped cobalt-free cathode material, wherein the composition of the cathode material is represented by a general formula of LiNiₓMn_{y}A_{z}O₂, wherein 0.55 ≤ x ≤ 0.95, 0.05 ≤ y ≤ 0.45, and 0.005 ≤ z ≤ 0.02; and the content of element A in the cathode material decreases in a direction from a skin layer to a center of the cathode material;
wherein the element A is one or more of Al, Zr, Ti, B and W.

2. The cathode material according to claim 1, wherein with reference to a total weight of the cathode material, the content of the element A in the skin layer of the cathode material is 0.2-2% by weight and the content of the element A in the center of the cathode material is 0.05-0.2% by weight.

3. The cathode material according to claim 2, wherein with reference to the total weight of the cathode material, the content of the element A in the skin layer of the cathode material is 0.2-1% by weight and the content of the element A in the center of the cathode material is 0.05-0.1% by weight.

4. The cathode material according to any one of claims 1 to 3, wherein with reference to the total weight of the cathode material, a total content of Al is 0.1-1% by weight, a total content of Zr is 0.1-2% by weight, a total content of Ti is 0.1-2% by weight, a total content of B is 0.1-1.5% by weight, and a total content of W is 0.1-2% by weight.

5. The cathode material according to claim 4, wherein with reference to the total weight of the cathode material, the total content of Al is 0.5-1% by weight, the total content of Zr is 0.5-1% by weight, the total content of Ti is 0.5-0.8% by weight, the total content of B is 0.5-1% by weight, and the total content of W is 0.5-1.5% by weight.

6. The cathode material according to any one of claims 1 to 5, wherein the cathode material is a single crystal material.

7. The cathode material according to any one of claims 1 to 6, wherein the cathode material has an average particle size of 1-5 µm.

8. The cathode material according to claim 7, wherein the cathode material has an average particle size of 3-4 µm.

9. A method for preparing a gradient-doped cobalt-free cathode material, comprising:
(1) carrying out first mixing and first calcination in sequence on a lithium salt, a precursor and a first additive to obtain a first material;
(2) carrying out second mixing and second calcination in sequence on the first material and a second additive to obtain a second material; and
(3) crushing and sieving the second material to obtain the gradient-doped cobalt-free cathode material;
wherein the precursor has a chemical formula of Niₓ₁Mn_{y1}(OH)₂, wherein 0.55 ≤ x1 ≤ 0.95 and 0.05 ≤ y1 ≤ 0.45; and
wherein the first additive and the second additive are the same and each selected from one or more of ZrO₂, Al₂O₃, TiO₂, Zr(OH)₄, Al(OH)₃, H₃BO₃ and WO₃.

10. The method according to claim 9, wherein in step (1), a weight ratio of the lithium salt, the precursor and the first additive is 1:(2-2.2):(0.003-0.03).

11. The method according to claim 9 or 10, wherein in step (2), a weight ratio of the first material and the second additive is 1:(0.004-0.06).

12. The method according to any one of claims 9 to 11, wherein a weight ratio of the first additive and the second additive is 1:(2-4).

13. The method according to any one of claims 9 to 12, wherein in step (1), conditions of the first mixing comprise stirring for 10-20 min with a 100L device at a rotational speed of 800-900 rpm.

14. The method according to any one of claims 9 to 13, wherein conditions of the first calcination comprise a temperature of 500-600 °C, a temperature ramp rate of 1-5 °C/min and a duration of 4-6 h.

15. The method according to any one of claims 9 to 14, wherein in step (2), conditions of the second mixing comprise stirring for 5-15 min with a 100L device at a rotational speed of 900-1000 rpm.

16. The method according to any one of claims 9 to 15, wherein conditions of the second calcination comprise a temperature of 900-1000 °C, a temperature ramp rate of 1-5 °C/min and a duration of 10-20 h.

17. A cobalt-free cathode material prepared by the method according to any one of claims 9 to 16.

18. A cathode of a lithium-ion battery, the cathode containing the cobalt-free cathode material according to any one of claims 1 to 8 and 17.

19. A lithium-ion battery, comprising a cathode and an anode, wherein the cathode is the cathode of a lithium-ion battery according to claim 18.
